# EUROPEAN PATENT APPLICATION

(11) **EP 4 560 283 A1**
(43) Date of publication of application: **28.05.2025**
(21) Application number: 23842669.6
(22) Date of filing: 16.05.2023
(51) Int. Cl.: G01M 11/00, G01N 21/88, G02B 6/44

(54) **OPTICAL FIBER END FACE OBSERVING DEVICE, AND OPTICAL FIBER END FACE OBSERVING METHOD**

(30) Priority: 21.07.2022 JP 2022116411
(71) Applicant: SUMITOMO ELECTRIC INDUSTRIES, LTD., Osaka-shi, Osaka 541-0041 (JP)
(72) Inventor: TAKANO Junya, Osaka-shi, Osaka 541-0041 (JP)
(74) Representative: TBK
(86) International application number: PCT/JP2023/018324
(87) International publication number: WO 2024/018737

(57) **Abstract**

This optical fiber end face observing device is a device for observing an end face of an optical fiber including a glass optical fiber, and a covering portion covering an outer circumference of the glass optical fiber. The optical fiber includes a covered region in which the glass optical fiber is covered by the covering portion, and a protruding region in which the glass optical fiber protrudes from a covering end face, which is an end face of the covering portion. The device comprises a light source for emitting light onto a reflecting surface which causes reflected light to be incident on a side surface of the protruding region, and a camera for acquiring an observation image of a glass end face of the protruding region.

## Description

### TECHNICAL FIELD

The present disclosure relates to an end-face observation device for an optical fiber and a method of observing an end face of an optical fiber. This application claims priority based on Japanese Patent Application No. 2022-116411 filed on July 21, 2022, and the entire contents of the Japanese Patent Application are incorporated herein by reference.

### BACKGROUND ART

There is a method of observing an end face of an optical fiber by using light incident from a side surface of the optical fiber (side incident light). Among the side incident light, a guided mode propagating through a low refractive index region has a much larger leakage loss than a guided mode propagating through a core, and thus tends to attenuate during propagation to the end face. Thus, an observation image of the end face of the optical fiber is displayed brighter in the higher refractive index region and darker in the lower refractive index region.

Patent literature 1 describes a structure (cladding mode stripper) for effectively removing a leak mode propagating through a cladding of an optical fiber.

### CITATION LIST

### PATENT LITERATURE

Patent literature 1: Japanese Unexamined Patent Application Publication No. 2015-1673

### SUMMARY OF INVENTION

An end-face observation device for an optical fiber according to an aspect of the present disclosure is a device of observing an end face of an optical fiber including a glass optical fiber and a coating portion coating an outer periphery of the glass optical fiber. The optical fiber has a coated region in which the glass optical fiber is coated with the coating portion, and a protruding region in which the glass optical fiber protrudes from a coating end face that is an end face of the coating portion. The device includes a light source configured to emit light to a reflecting surface configured to cause reflected light to be incident on a side surface of the protruding region, and a camera configured to acquire an observation image of a glass end face of the protruding region.

### BRIEF DESCRIPTION OF THE DRAWINGS

FIG. 1 is a perspective view of an MCF.
FIG. 2 is a cross-sectional view and a refractive index profile of a glass optical fiber.
FIG. 3 is a configuration diagram of an end-face observation device according to a first embodiment.
FIG. 4 is a plan view of a light source.
FIG. 5 is a flowchart of a method of observing an end face according to the first embodiment.
FIG. 6 is a configuration diagram of an end-face observation device according to a second embodiment.
FIG. 7 is a configuration diagram of an end-face observation device according to a third embodiment.
FIG. 8 is a configuration diagram of an end-face observation device according to a fourth embodiment.
FIG. 9 is a perspective view of an MCF and a fiber holder shown in FIG. 8.
FIG. 10 is a configuration diagram of an end-face observation device according to a fifth embodiment.
FIG. 11 is a perspective view of an MCF and a fiber holder shown in FIG. 10.

### DETAILED DESCRIPTION

### [Problems to be Solved by Present Disclosure]

For example, in a multi-core optical fiber (MCF), a refractive index of a marker in a cladding is set to be lower than a refractive index of the cladding, thereby suppressing leakage of light from the core. However, since both the cladding and the marker are low refractive index regions, the identification of the marker may be unclear.

An object of the present disclosure is to provide an end-face observation device for an optical fiber and a method of observing an end face of an optical fiber that enable clear observation even in a low refractive index region.

### [Advantageous Effects of Present Disclosure]

According to the present disclosure, it is possible to provide an end-face observation device for an optical fiber and a method of observing an end face of an optical fiber that enable clear observation even in a low refractive index region.

### [Description of Embodiments of Present Disclosure]

First, embodiments of the present disclosure will be listed and described.
(1) An end-face observation device for an optical fiber according to an aspect of the present disclosure is a device of observing an end face of an optical fiber including a glass optical fiber and a coating portion coating an outer periphery of the glass optical fiber. The optical fiber has a coated region in which the glass optical fiber is coated with the coating portion, and a protruding region in which the glass optical fiber protrudes from a coating end face that is an end face of the coating portion. The device includes a light source configured to emit light to a reflecting surface configured to cause reflected light to be incident on a side surface of the protruding region, and a camera configured to acquire an observation image of a glass end face of the protruding region. In this end-face observation device for the optical fiber, light emitted from the light source and reflected from the reflecting surface is incident on the protruding region from the side surface and is emitted from the glass end face. Since the protruding region is surrounded by air, the leakage of light is reduced further than a leakage for the protruding region being surrounded by a coating resin. Thus, the end face can be clearly observed even in a low refractive index region.
(2) In the end-face observation device for the optical fiber according to the above (1), the reflecting surface may be the coating end face. In this case, light emitted from the light source can be efficiently incident on the protruding region by reflection.
(3) In the end-face observation device for the optical fiber according to the above (1) or (2), the coating portion may include a coating resin. In this case, since the coating resin is provided in contact with the outer periphery surface of the glass optical fiber, light reflected from the coating end face tends to be incident on the protruding region from the side surface.
(4) In the end-face observation device for the optical fiber according to the above (3), the optical fiber may be an uncolored optical fiber. The coating resin may include a primary resin layer coating the outer periphery of the glass optical fiber and a secondary resin layer coating an outer periphery of the primary resin layer. Even in this case, the light reflected from the coating end face is incident on the protruding region from the side surface.
(5) In the end-face observation device for the optical fiber according to the above (3), the optical fiber may be a colored optical fiber. The coating resin may include a primary resin layer coating the outer periphery of the glass optical fiber, a secondary resin layer coating an outer periphery of the primary resin layer, and a colored resin layer coating an outer periphery of the secondary resin layer. Even in this case, the light reflected from the coating end face is incident on the protruding region from the side surface.
(6) The end-face observation device for the optical fiber according to any one of the above (2) to (4) may further include a fiber holder configured to hold the optical fiber. In this case, the optical fiber can be held by the fiber holder.
(7) In the end-face observation device for the optical fiber according to the above (6), the reflecting surface may be a tip end face of the fiber holder.
(8) In the end-face observation device for the optical fiber according to any one of the above (1) to (7), the light source may have a light emitting surface facing the reflecting surface. A hollow portion may be provided in a central portion of the light emitting surface. In this case, the reflecting surface can be efficiently irradiated with light.
(9) In the end-face observation device for the optical fiber according to any one of the above (1) to (8), the light source may emit light having a single wavelength or a plurality of wavelengths included in a visible region and a near-infrared region. In this case, even when the coating portion is black or transparent, the reflecting surface can reflect light.
(10) In the end-face observation device for the optical fiber according to any one of the above (1) to (9), the camera may be an image-processing support camera configured to calculate a rotation angle of the optical fiber. In this case, rotational alignment of the optical fiber can be precisely performed.
(11) A method of observing an end face of an optical fiber according to an aspect of the present disclosure is a method of observing an end face of an optical fiber including a glass optical fiber and a coating portion coating an outer periphery of the glass optical fiber. The method includes preparing a coated region in which the glass optical fiber is coated with the coating portion, and a protruding region in which the glass optical fiber protrudes from a coating end face that is an end face of the coating portion by cutting and removing the coating portion; emitting light to a reflecting surface configured to cause reflected light to be incident on a side surface of the protruding region; and acquiring an observation image of a glass end face of the protruding region. In this method of observing the end face, the light emitted from a light source and reflected from the reflecting surface is incident on the protruding region from the side surface and is emitted from the glass end face. Since the protruding region is surrounded by air, the leakage of light is reduced further than a leakage for the protruding region being surrounded by a coating resin. Thus, the end face can be clearly observed even in the low refractive index region.

### [Details of Embodiments of Present Disclosure]

Specific examples of an end-face observation device for an optical fiber and a method of observing an end face of an optical fiber of the present disclosure will be described below with reference to the drawings. The present invention is not limited to these examples, but is defined by the scope of the claims, and is intended to include all modifications within the meaning and scope equivalent to the scope of the claims. In the description of the drawings, the same elements are denoted by the same reference numerals, and redundant description will be omitted.

### (First Embodiment)

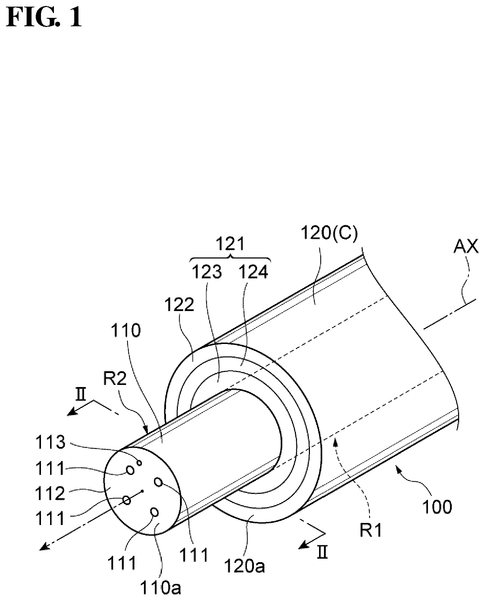

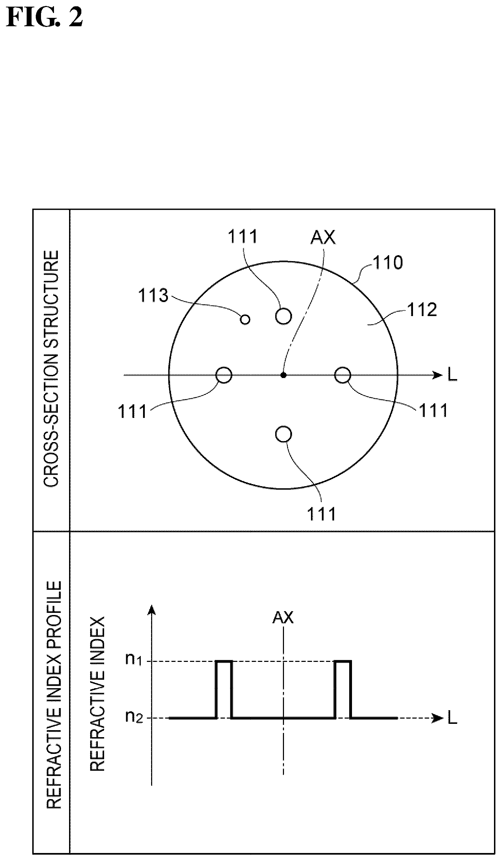

Referring to FIG. 1 and FIG. 2, an optical fiber whose end face is to be observed with an end-face observation device for an optical fiber and a method of observing an end face of an optical fiber according to a first embodiment will be described, with an MCF being exemplified as an example. FIG. 1 is a perspective view of an MCF. An upper part in FIG. 2 is a cross-sectional view of a glass optical fiber taken along line II-II in FIG. 1. A lower part in FIG. 2 shows a refractive index profile of the glass optical fiber along a line L shown in the upper part in FIG. 2. As shown in FIG. 1, an MCF 100 includes a glass optical fiber 110 and a coating resin 120. Glass optical fiber 110 includes four cores 111, a cladding 112, and a marker 113 for identifying cores 111.

As shown in FIG. 1 and FIG. 2, a plurality of cores 111 are arranged at equal intervals on the circumference of a circle centered on a central axis AX in a cross section orthogonal to central axis AX of MCF 100. MCF 100 is, for example, a square 4-core MCF, and the number of cores 111 is four. A refractive index n₁ of core 111 is higher than a refractive index n₂ of cladding 112. Cladding 112 is a common cladding surrounding the plurality of cores 111 and marker 113. Marker 113 has a refractive index lower than refractive index n₁ and different from refractive index n₂. Marker 113 is disposed at a position that breaks the symmetry of the arrangement of the plurality of cores 111, that is, at a position which is asymmetric with respect to the symmetry of the arrangement of the plurality of cores 111. A diameter of marker 113 is smaller than a diameter of cores 111.

Coating resin 120 forms a coating portion C that coats an outer periphery (outer edge) of glass optical fiber 110. That is, coating portion C includes coating resin 120. Coating resin 120 is provided in contact with the outer periphery surface of glass optical fiber 110. Coating resin 120 includes a primary coating 121 and a secondary coating 122. Primary coating 121 includes a primary resin layer 123 and a secondary resin layer 124. Primary resin layer 123 coats the outer periphery of glass optical fiber 110. Secondary resin layer 124 coats an outer periphery of primary resin layer 123. Primary resin layer 123 and secondary resin layer 124 may include a transparent or opaque colored ink as necessary.

Secondary coating 122 coats an outer periphery of primary coating 121. Secondary coating 122 is a colored resin layer including a transparent or opaque colored ink. Secondary coating 122 is provided to ensure identification property and mechanical strength. The optical fiber formed of glass optical fiber 110 and primary coating 121 is referred to as an uncolored optical fiber. An optical fiber formed of glass optical fiber 110, primary coating 121, and secondary coating 122 is referred to as a colored optical fiber. MCF 100 of the present embodiment is a colored optical fiber.

Glass optical fiber 110 includes a coated region R1 and a protruding region R2. Coated region R1 and protruding region R2 are regions extending in a longitudinal direction of glass optical fiber 110, and are adjacent to each other in the longitudinal direction of glass optical fiber 110. An outer periphery of coated region R1 is coated with coating resin 120. Protruding region R2 protrudes, along central axis AX, from a coating end face 120a that is an end face of coating resin 120. A length of protruding region R2 along central axis AX is, for example, about several mm to several tens of mm.

Coating resin 120 is cut and removed in protruding region R2. That is, coating end face 120a is a coating-removed surface. Coating end face 120a is provided, for example, perpendicularly to central axis AX. Protruding region R2 is exposed from coating resin 120. Protruding region R2 has a glass end face 110a which is one end face of glass optical fiber 110 in the longitudinal direction. Glass end face 110a is a cut surface which is cut perpendicularly to central axis AX.

When a refractive index of marker 113 is higher than refractive index n₂ of cladding 112, the diameter of marker 113 needs to be smaller than the diameter of core 111, or the refractive index of marker 113 needs to be lower than refractive index n₁ of core 111. This suppresses coupling between a mode propagating through core 111 and a mode propagating through marker 113. Thus, noise mixed into signal light propagating in core 111 is suppressed.

In a structure in which a core density of MCF 100 is further increased and a distance between marker 113 and core 111 is reduced, the refractive index of marker 113 may be lower than refractive index n₂ of cladding 112 in order to minimize the interference of signal light between marker 113 and core 111. However, in the end-face observation using the side incident light, marker 113 which is a low refractive index region may be unclear in identification. In this case, core 111 cannot be identified.

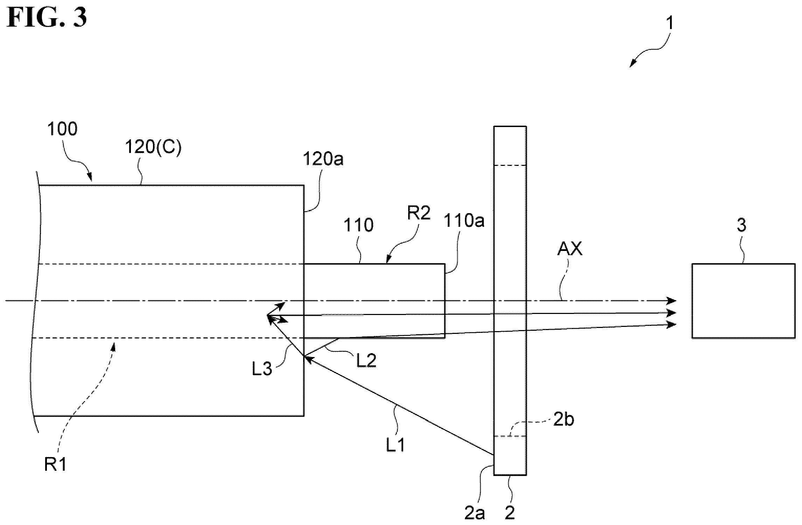

FIG. 3 is a configuration diagram of an end-face observation device according to the first embodiment. As shown in FIG. 3, an end-face observation device 1 includes a light source 2 and a camera 3. Light source 2 emits light to coating end face 120a. Light source 2 may be able to emit light to coating end face 120a uniformly in a circumferential direction (around the entire circumference, that is, 360 degrees). Light source 2 is disposed, for example, on a side where glass end face 110a is present with respect to coating end face 120a in a direction along central axis AX (axial direction). Light source 2 may be disposed between coating end face 120a and glass end face 110a, or may be disposed farther than glass end face 110a with respect to coating end face 120a, in the axial direction. Light source 2 need to be able to emit light to at least coating end face 120a, and may emit light to glass end face 110a.

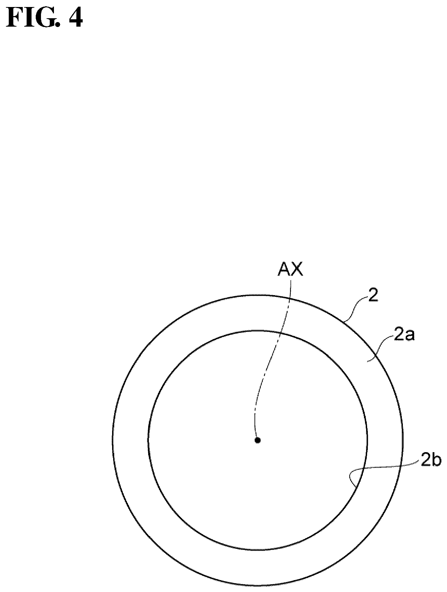

FIG. 4 is a plan view of a light source. As shown in FIG. 3 and FIG. 4, light source 2 has a light emitting surface 2a facing coating end face 120a. Light source 2 is a hollow-type light source, and a hollow portion 2b is provided in a central portion of light emitting surface 2a. Light source 2 is disposed such that central axis AX passes through hollow portion 2b, for example. Light source 2 is, for example, frame-shaped or annular. Light source 2 does not have a light emitting element on an observation axis connecting the center of glass end face 110a and the center of the camera. An outer edge of light emitting surface 2a, and hollow portion 2b are, for example, circular as viewed in the axial direction. That is, light source 2 is circularly framed or circularly annular. Light source 2 may be rectangularly framed or rectangularly annular, and the outer edge of light emitting surface 2a, and hollow portion 2b may be rectangular as viewed in the axial direction. Light source 2 may be polygonally framed or polygonally annular. The hollow-type light source can efficiently emit light to coating end face 120a. Light source 2 is not limited to a continuous frame or annular shape without interruption, and may have an interrupted portion.

Camera 3 captures light emitted from glass end face 110a with an image sensor, and acquires an observation image of glass end face 110a in protruding region R2. Camera 3 is, for example, an image-processing support camera that calculates a rotation angle of MCF 100. The image-processing support camera enables rotational alignment of MCF 100 to be performed precisely. Camera 3 is disposed on central axis AX so as to face glass end face 110a, for example.

Light L1 emitted from light source 2 is emitted to coating end face 120a. Among light L1, light L2 reflected from coating end face 120a and light L3 backscattered inside coating resin 120 after passing through coating end face 120a are incident on protruding region R2 of glass optical fiber 110 from the side surface and are emitted from glass end face 110a. That is, light source 2 emits light to coating end face 120a which is a reflecting surface that cause light L2, which is reflected light, to be incident on the side surface of protruding region R2.

Protruding region R2 is not surrounded by coating resin 120, but surrounded by air. Thus, in a mode in which light L2 and light L3 propagate through the low refractive index region, the leakage of light is reduced further than a leakage for a conventional side incidence in which protruding region R2 is surrounded by coating resin 120. A propagation length of light L2 propagating through glass optical fiber 110 is equal to or less than a length of protruding region R2, and is shorter than a propagation length in the conventional side incidence. A propagation length of light L3 propagating through glass optical fiber 110 is also reduced as compared with the propagation length of the conventional side incidence. In this manner, in the mode in which light L2 and light L3 propagate through the low refractive index region, the propagation length is reduced as compared with the conventional side incidence, and thus the attenuation amount is reduced. As described above, the end face can be clearly observed even in the low refractive index region.

Light source 2 emits light having a single wavelength or a plurality of wavelengths included in a visible region and a near-infrared region. Light source 2 is, for example, a white light source, and emits white light including all light in the visible region. When coating resin 120 is other than black or transparent, light can be sufficiently reflected from coating end face 120a. The visible region is a wavelength region from 360 nm to 800 nm. The near-infrared region is a wavelength region from 800 nm to 2500 nm.

Light source 2 may emit, for example, near-infrared light. When coating resin 120 is black or transparent, the reflected light from coating end face 120a may not be sufficiently obtained using the white light source. Even in this case, the reflected light of coating end face 120a can be sufficiently obtained using the light source of the near-infrared wavelength. Thus, glass end face 110a can be clearly observed even in the low refractive index region. In this case, camera 3 needs to be able to detect light in a wavelength range of a used light source. From the above, it is important that the wavelength of the light emitted from light source 2 is included in the range from the visible region to the near-infrared region.

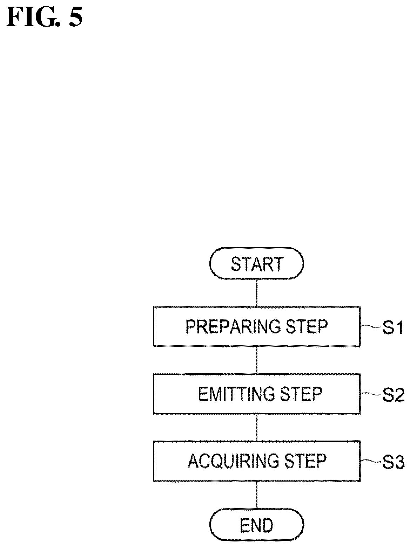

FIG. 5 is a flowchart of a method of observing an end face according to the first embodiment. The method of observing an end face according to the first embodiment is performed using end-face observation device 1. As shown in FIG. 5, the method of observing an end face includes a preparing step S1, an emitting step S2, and an acquiring step S3. In the preparing step S1, an MCF to be measured is cut, and coating resin 120 at an end portion is removed. That is, in the preparing step S1, coating portion C is cut and removed to prepare coated region R1 in which glass optical fiber 110 is coated with coating portion C, and protruding region R2 in which glass optical fiber 110 protrudes from coating end face 120a that is an end face of coating portion C. Subsequently, obtained MCF 100 is disposed in end-face observation device 1 such that glass end face 110a faces camera 3 in the axial direction. In the emitting step S2, light L1 is emitted to coating end face 120a using light source 2. Light L2 reflected from coating end face 120a among light L1 is incident on the side surface of protruding region R2. That is, in the emitting step S2, light L1 is emitted to coating end face 120a which is a reflecting surface that cause light L2, which is the reflected light, to be incident on the side surface of protruding region R2. In the acquiring step S3, the light emitted from glass end face 110a is captured by the imaging device using camera 3 to acquire an observation image of glass end face 110a.

As described above, according to end-face observation device 1 and the method of observing an end face according to the first embodiment, light L2 reflected from coating end face 120a and light L3 backscattered inside coating resin 120 after passing through coating end face 120a are incident on protruding region R2 from the side surface and are emitted from glass end face 110a. Since protruding region R2 is surrounded by air, the leakage of light is reduced further than a leakage for protruding region R2 being surrounded by a coating resin. Furthermore, the propagation length of light L2 and L3 propagating through glass optical fiber 110 is reduced further than the propagation length of the conventional side incidence, and thus, the attenuation amount is reduced. As described above, the end face can be clearly observed even in the low refractive index region.

Since coating resin 120 is provided in contact with the outer periphery surface of glass optical fiber 110, light L2 reflected from coating end face 120a tends to be incident on protruding region R2 from the side surface.

### (Second Embodiment)

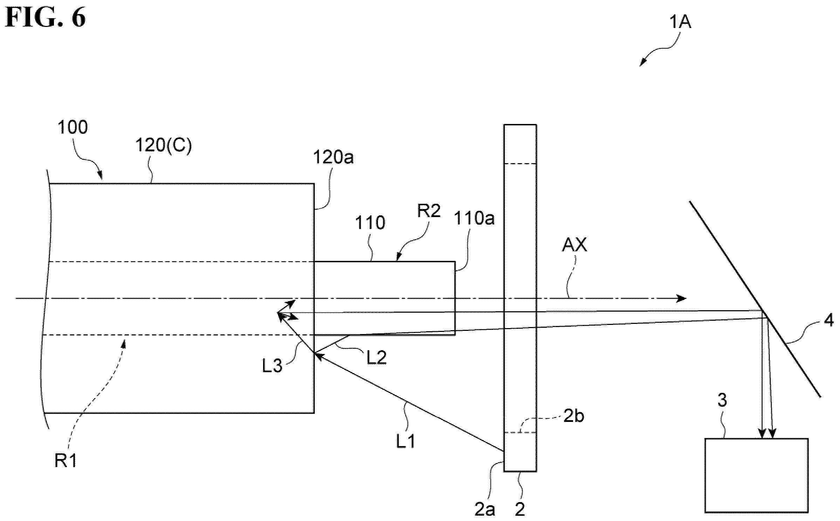

FIG. 6 is a configuration diagram of an end-face observation device according to a second embodiment. As shown in FIG. 6, an end-face observation device 1A according to the second embodiment is different from end-face observation device 1 in that end-face observation device 1A further includes at least one mirror element 4. Light emitted from glass end face 110a reaches camera 3 through at least one mirror element 4. Although not shown, the light emitted from light source 2 may pass through at least one mirror element 4 before reaching coating end face 120a. What is important is that light source 2 emits light to coating end face 120a, and light source 2 can be disposed at any position as long as the light from light source 2 passes through mirror element 4 and the like.

### (Third Embodiment)

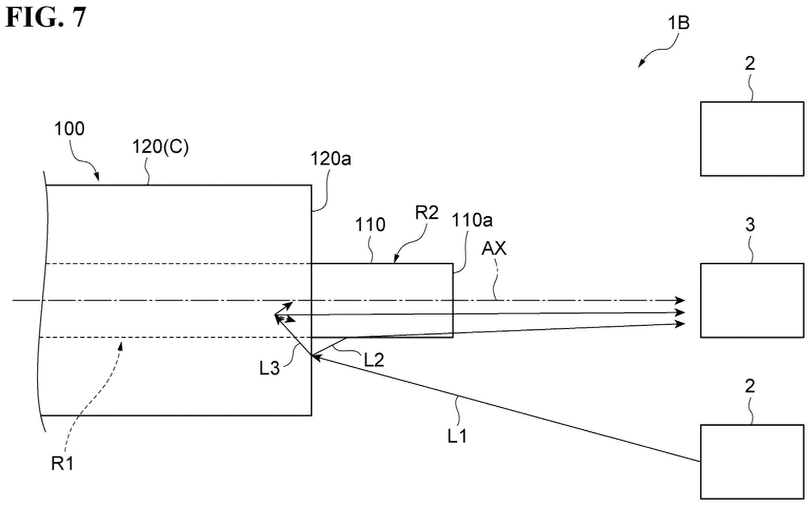

FIG. 7 is a configuration diagram of an end-face observation device according to a third embodiment. As shown in FIG. 7, an end-face observation device 1B according to the third embodiment is different from end-face observation device 1 in that end-face observation device 1B has a plurality of light sources 2 instead of light source 2 (see FIG. 3) which is a hollow light source. In end-face observation device 1B, for example, two identical light sources 2 are each arranged above and below camera 3 with camera 3 being interposed therebetween. Only the optical path of light emitted from one of light sources 2 is shown, and the optical path of light emitted from the other of light sources 2 is omitted. What is important is that light sources 2 emit light L1 to coating end face 120a, and the number of light sources 2 and the emitting angle can be set as appropriate. Light sources 2 need to be able to emit light L1 to at least coating end face 120a, and the light from light sources 2 may be emitted also to other portions such as glass end face 110a.

### (Fourth Embodiment)

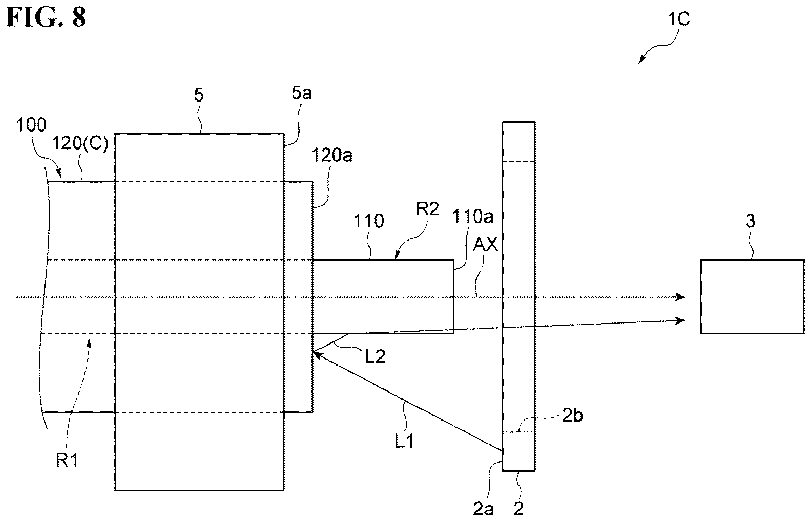

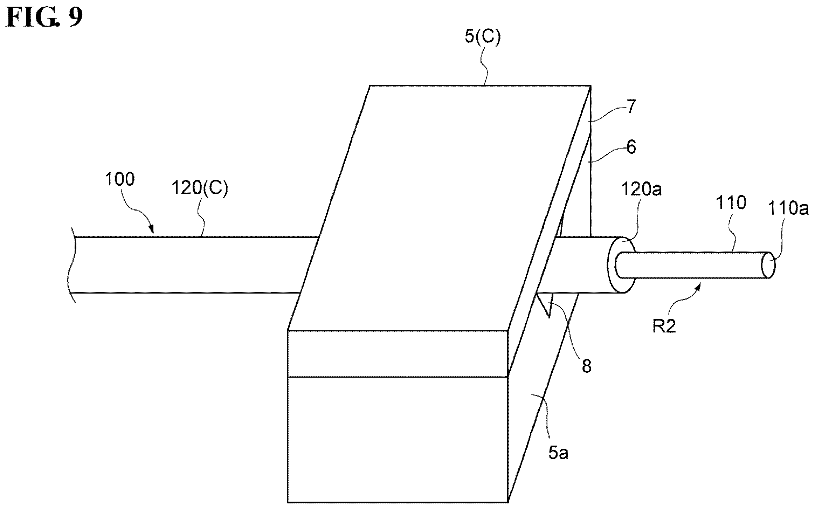

FIG. 8 is a configuration diagram of an end-face observation device according to a fourth embodiment. FIG. 9 is a perspective view of the MCF and the fiber holder shown in FIG. 8. As shown in FIG. 8 and FIG. 9, an end-face observation device 1C according to the fourth embodiment is different from end-face observation device 1 in that end-face observation device 1C further includes a fiber holder 5 that holds MCF 100. Fiber holder 5 forms coating portion C together with coating resin 120. That is, in end-face observation device 1C, coating portion C further includes fiber holder 5 in addition to coating resin 120.

Fiber holder 5 includes a substrate 6 and a clamp portion 7. Substrate 6 is provided with a V-groove 8 in which MCF 100 is placed. With MCF 100 placed on V-groove 8, clamp portion 7 is disposed on substrate 6 and pressed toward substrate 6. Thus, MCF 100 is held. Fiber holder 5 holds a vicinity of protruding region R2 in coating resin 120.

Fiber holder 5 has a tip end face 5a close to protruding region R2. Tip end face 5a is a surface facing the axial direction, and is, for example, a surface perpendicular to central axis AX. Fiber holder 5 holds MCF 100 in a state where a part of coating resin 120 together with protruding region R2 is protruded from tip end face 5a. In end-face observation device 1C, tip end face 5a forms the coating end face of coating portion C together with coating end face 120a. That is, tip end face 5a can form a reflecting surface that reflects light L1 and cause light L2 to be incident on the side surface of protruding region R2, together with coating end face 120a.

### (Fifth Embodiment)

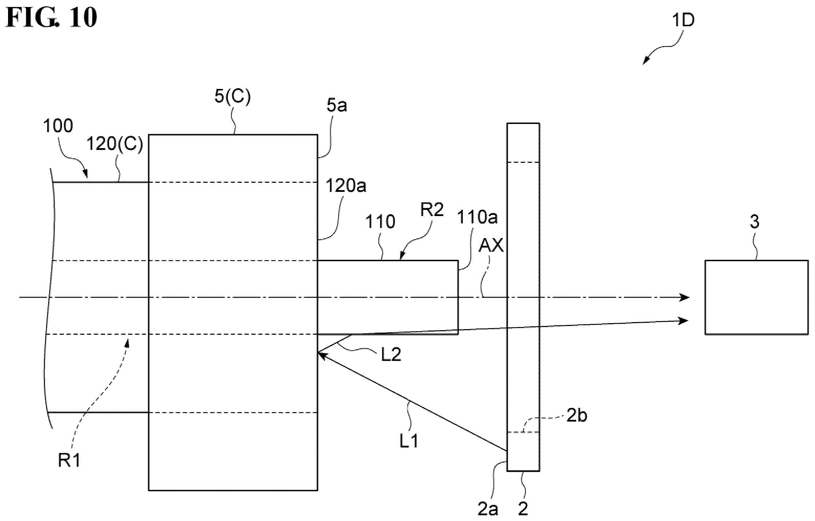

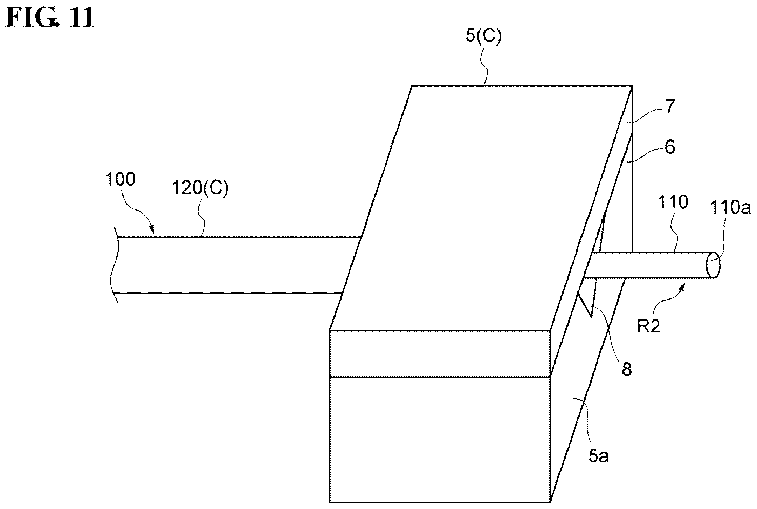

FIG. 10 is a configuration diagram of an end-face observation device according to a fifth embodiment. FIG. 11 is a perspective view of the MCF and the fiber holder shown in FIG. 10. As shown in FIG. 10 and FIG. 11, an end-face observation device 1D according to the fifth embodiment is different from end-face observation device 1C in that fiber holder 5 holds MCF 100 with coating end face 120a being aligned with tip end face 5a without coating resin 120 protruding from tip end face 5a. In end-face observation device 1D, tip end face 5a forms the coating end face of coating portion C together with coating end face 120a. That is, tip end face 5a can form a reflecting surface that reflects light L1 and cause light L2 to be incident on the side surface of protruding region R2, together with coating end face 120a.

In end-face observation device 1D, the end face can be observed with the reflected light from coating end face 120a. Usually, fiber holder 5 is subjected to a surface treatment such as black alumite treatment in order to reduce stray light in the observation system, thereby suppressing reflection of light. Thus, light L1 emitted from light source 2 is absorbed and scattered by tip end face 5a, and the reflected light does not sufficiently reach the side surface of protruding region R2.

In end-face observation device 1C, light L1 emitted from light source 2 is also incident on the side of coating resin 120 protruding from tip end face 5a. The side incident light is scattered in coating resin 120 toward coating end face 120a and enters the side of glass optical fiber 110 from the inner circumferential surface of coating resin 120. As a result, the amount of side incident light increases, and thus end-face observation device 1C can perform end-face observation more clearly than end-face observation device 1D.

In end-face observation devices 1C and 1D, the reflectance of tip end face 5a may be increased. For example, the surface of fiber holder 5 may be subjected to a process for increasing the reflectance, such as a white alumite treatment. Fiber holder 5 may be formed of a metal component having a high reflectance. In this case, for example, even in a configuration in which coating end face 120a is covered with fiber holder 5, light from light source 2 can be reflected from tip end face 5a, and the reflected light can be incident on the side surface of protruding region R2. Thus, the end face can be clearly observed even in the low refractive index region.

The above description includes the features appended below.

### [Appendix 1]

An end-face observation device for an optical fiber including a glass optical fiber, the glass optical fiber having a coated region in which an outer periphery is coated with a coating portion, and a protruding region protruding from a coating end face of the coating portion, including:
a light source configured to emit light to the coating end face; and
a camera configured to acquire an observation image of a glass end face of the protruding region.

### [Appendix 2]

A method of observing an end face of an optical fiber including a glass optical fiber, the glass optical fiber having a coated region in which an outer periphery is coated with a coating portion, and a protruding region protruding from a coating end face of the coating portion, the method including:
emitting light to the coating end face; and
acquiring an observation image of a glass end face of the protruding region.

Although the embodiments have been described above, the present disclosure is not necessarily limited to the above-described embodiments and modifications, and various changes can be made without departing from the spirit and scope of the present disclosure.

Although the optical fiber to be subject to the end-face observation is MCF 100 has been described, the number of cores, the core arrangement, and the refractive index structure are not limited to the above-described examples. The optical fiber may be a polarization-maintaining optical fiber having a stress applying portion. The stress applying portion is generally formed by adding boron, and has a refractive index lower than a refractive index of the cladding, and thus, the end-face observation device and the method of observing an end face in the present disclosure work effectively.

The above embodiments and modifications may be combined with each other as appropriate.

### REFERENCE SIGNS LIST

1, 1A, 1B, 1C, 1D end-face observation device
2 light source
2a light emitting surface
2b hollow portion
3 camera
4 mirror element
5 fiber holder
5a tip end face
6 substrate
7 clamp portion
8 V-groove
100 MCF
110 glass optical fiber
110a glass end face
111 core
112 cladding
113 marker
120 coating resin
120a coating end face
121 primary coating
122 secondary coating
123 primary resin layer
124 secondary resin layer
AX central axis
C coating portion
L line
L1, L2, L3 light
n₁, n₂ refractive index

## Claims

1. An end-face observation device for an optical fiber including a glass optical fiber and a coating portion coating an outer periphery of the glass optical fiber,
wherein the optical fiber has
a coated region in which the glass optical fiber is coated with the coating portion, and
a protruding region in which the glass optical fiber protrudes from a coating end face that is an end face of the coating portion, and
wherein the device includes
a light source configured to emit light to a reflecting surface configured to cause reflected light to be incident on a side surface of the protruding region, and
a camera configured to acquire an observation image of a glass end face of the protruding region.

2. The end-face observation device for the optical fiber according to claim 1, wherein the reflecting surface is the coating end face.

3. The end-face observation device for the optical fiber according to claim 1 or 2, wherein the coating portion includes a coating resin.

4. The end-face observation device for the optical fiber according to claim 3,
wherein the optical fiber is an uncolored optical fiber, and
wherein the coating resin includes a primary resin layer coating the outer periphery of the glass optical fiber and a secondary resin layer coating an outer periphery of the primary resin layer.

5. The end-face observation device for the optical fiber according to claim 3,
wherein the optical fiber is a colored optical fiber, and
wherein the coating resin includes a primary resin layer coating the outer periphery of the glass optical fiber, a secondary resin layer coating an outer periphery of the primary resin layer, and a colored resin layer coating an outer periphery of the secondary resin layer.

6. The end-face observation device for the optical fiber according to any one of claims 1 to 5, further comprising a fiber holder configured to hold the optical fiber.

7. The end-face observation device for the optical fiber according to claim 6, wherein the reflecting surface is a tip end face of the fiber holder.

8. The end-face observation device for the optical fiber according to any one of claims 1 to 7,
wherein the light source has a light emitting surface facing the reflecting surface, and
wherein a hollow portion is provided in a central portion of the light emitting surface.

9. The end-face observation device for the optical fiber according to any one of claims 1 to 8, wherein the light source emits light having a single wavelength or a plurality of wavelengths included in a visible region and a near-infrared region.

10. The end-face observation device for the optical fiber according to any one of claims 1 to 9, wherein the camera is an image-processing support camera configured to calculate a rotation angle of the optical fiber.

11. A method of observing an end face of an optical fiber including a glass optical fiber and a coating portion coating an outer periphery of the glass optical fiber, the method comprising:
preparing a coated region in which the glass optical fiber is coated with the coating portion, and a protruding region in which the glass optical fiber protrudes from a coating end face that is an end face of the coating portion by cutting and removing the coating portion;
emitting light to a reflecting surface configured to cause reflected light to be incident on a side surface of the protruding region, and
acquiring an observation image of a glass end face of the protruding region.
